# EUROPÄISCHE PATENTSCHRIFT

(11) **EP 0 988 232 B1**
(45) Veröffentlichungstag und Bekanntmachung des Hinweises auf die Patenterteilung: **13.11.2002**
(21) Anmeldenummer: 99907543.5
(22) Anmeldetag: 12.02.1999
(51) Int. Cl.: B65C 9/42, G01B 11/02

(54) **ETIKETTENSENSOR**
LABEL SENSOR
CAPTEUR POUR ETIQUETTES

(30) Priorität: 14.02.1998 DE 19806124
(43) Veröffentlichungstag der Anmeldung: 29.03.2000
(73) Patentinhaber: Leuze electronic GmbH + Co., 73277 Owen/Teck (DE)
(72) Erfinder: PRIEBSCH, Hans, Dieter, D-73266 Bissingen (DE)
(74) Vertreter: Ruckh, Rainer Gerhard, Dr.
(86) Internationale Anmeldenummer: EP9900912
(87) Internationale Veröffentlichungsnummer: WO99041151

(56) Entgegenhaltungen:
- US-A- 4 685 982
- US-A- 4 690 565
- US-A- 5 133 396

## Beschreibung

Die Erfindung betrifft einen Sensor zur Abtastung von Etiketten auf einem Trägermaterial gemäß dem Oberbegriff des Anspruchs 1 oder 2.

Ein derartiger Sensor ist aus der US 4 685 982 bekannt. Der Sensor dient zur Detektion von auf Trägermaterialien angeordneten Etiketten und weist einen Sendelichtstrahlen emittierenden Sender sowie ein Empfangselement auf. Die Strahlachsen des Senders und des Empfangselements laufen in einem Winkel kleiner als 180° in Richtung der Ebene des Trägermaterials aufeinander zu. Die vom Sender emittierenden Sendelichtstrahlen verlaufen innerhalb der transparenten Etiketten bevor sie zum Empfangselement zurück reflektiert werden.

Aus der DE 195 21 129 C1 ist ein kapazitiver Sensor mit zwei nebeneinander liegenden Kondensatorelementen bekannt. Die Kondensatorelemente weisen, jeweils einen Luftspalt auf, in welchem das Trägermaterial mit den Etiketten geführt ist. Der Abstand zwischen den Kondensatorelementen ist kleiner als die Abmessung der Etiketten in Abtastrichtung. Jedem Kondensatorelement ist ein eine Pulsfolge erzeugendes Zeitglied und ein Tiefpass nachgeschaltet. Die Zeitglieder werden zeitversetzt über einen Oszillator aktiviert. Die Ausgänge der Tiefpässe sind auf einen Differenzverstärker geführt. Mit den am Ausgang des Differenzverstärkers anstehenden Signalen sind die Kanten der Etiketten detektierbar.

Jedoch lässt sich aus diesen Signalen keine Information gewinnen, ob das Ende oder der Anfang einer Etikette detektiert wurde.

Ferner ist nachteilig, dass die Signale des kapazitiven Sensors sehr störanfällig gegenüber externen Einflüssen wie Feuchtigkeit und Temperatur sind.

Der Erfindung liegt die Aufgabe zugrunde, einen Sensor der eingangs genannten Art so auszubilden, dass die Etiketten auf dem Trägermaterial möglichst sicher erfasst werden können.

Zur Lösung dieser Aufgabe sind die Merkmale der Ansprüche 1 und 2 vorgesehen. Vorteilhafte Ausführungsformen und zweckmäßige Weiterbildungen der Erfindung sind in den Unteransprüchen beschrieben.

Der Sensor ist erfindungsgemäß als optoelektronischer Sensor ausgebildet. Dessen Sender ist in Abstand zu den Etiketten angeordnet, auf die die vom Sender emittierten Sendelichtstrahlen gerichtet sind. Gemäß einer ersten Alternative der Erfindung arbeitet der Sensor im Durchlichtverfahren. Hierzu ist auf der dem Sender gegenüberliegenden Seite der Etiketten ein Empfangselement angeordnet, auf welches die die Etiketten durchdringenden Sendelichtstrahlen auftreffen.

Das Empfangselement weist zwei Empfänger auf, die in Bewegungsrichtung der Etiketten hintereinander in Abstand so angeordnet sind, dass die Strahlachse zwischen den Empfängern verläuft.

Mit dem Sensor gemäß Anspruch 1 können transparente Etiketten, die auf einem transparenten Trägermaterial, und mit dem Sensor gemäß Anspruch 2 können transparente Etiketten, die auf einem nicht transparenten Trägermaterial aufgebracht sind, sicher erkannt werden.

Treffen die Sendelichtstrahlen bei einem Sensor gemäß Anspruch 1 mit dem gesamten Strahldurchmesser auf eine Etikette oder auf das Trägermaterial zwischen Etiketten, so durchdringen sie diese ebene Fläche und verlaufen zwischen den Empfängern ohne dass sie auf diese auftreffen.

Dies wird vorzugsweise dadurch erreicht, dass die Sendelichtstrahlen in rechtem Winkel auf die Etikette oder das Trägermaterial auftreffen.

Treffen die Sendelichtstrahlen auf eine Kante der Etikette, so wird ein Teil der Sendelichtstrahlen durch Beugung oder Lichtbrechung in die Etikette eingekoppelt und verläuft durch Mehrfachreflexion an den Etikettenoberflächen in der Etikette.

Dabei tritt ein Teil dieser Sendelichtstrahlen aus der Etikette aus und trifft auf einen der Empfänger. Das im Empfänger registrierte Empfangssignal wird zur Erkennung der Etikettenkante in der Auswerteeinheit ausgewertet.

Dabei wird je nachdem ob der Anfang oder das Ende der Etikette erkannt wird, jeweils Sendelicht nur auf einen bestimmten Empfänger geführt. Durch die Auswertung, zu welchem der Empfänger das Empfangssignal ansteht kann somit ausgewertet werden, ob der Anfang oder das Ende einer Etikette detektiert wurde.

Der optische Sensor ist unempfindlich gegen Temperatureinflüsse und Feuchtigkeit.

Zudem ist vorteilhaft, dass bei dem optischen Sensor der Abstand zwischen Sender und Empfangselement relativ groß gewählt werden kann, was die Handhabbarkeit des Sensors erleichtert.

Gemäß einer zweiten Alternative der Erfindung sind der Sender und die Empfänger auf derselben Seite des Trägermaterials mit den Etiketten angeordnet. Dabei sind die Empfänger in Bewegungsrichtung der Etiketten beidseits des Senders angeordnet. In diesem Fall wird das an der Etikettenkante gebeugte oder gebrochene Licht in die Etikette eingeleitet. Der durch Mehrfachreflexion an der Grenzschicht der Etikette austretende Lichtanteil wird vom jeweiligen Empfänger detektiert.

In einer besonders vorteilhaften Ausführungsform der Erfindung ist ein dritter Empfänger vorgesehen, der in der Strahlachse der Sendelichtstrahlen zwischen den beiden ersten Empfängern angeordnet ist. Mit diesem Empfänger sind nicht transparente Etiketten und Trägermaterialen wie zum Beispiel Papier detektierbar.
- Figur 1:: Schematische Darstellung des Aufbaus eines ersten Ausführungsbeispiels des Sensors zur Abtastung von Etiketten,
a) zu einem ersten Zeitpunkt t_{1,}
b) zu einem zweiten Zeitpunkt t₂
- Figur 2:: Schematische Darstellung des Aufbaus eines zweiten .Ausführungsbeispiels des Sensors zur Abtastung von Etiketten,
a) zu einem ersten Zeitpunkt t₁,
b) zu einem zweiten Zeitpunkt t₂
- Figur 3:: Blockschaltbild eines ersten Ausführungsbeispiels der Auswerteeinheit des Sensors gemäß Figuren 1 oder 2.
- Figur 4:: Impulsdiagramm der in der Auswerteeinheit verarbeiteten Empfangssignale.
- Figur 5:: Blockschaltbild eines zweiten Ausführungsbeispiels der Auswerteeinheit des Sensors gemäß Figuren 1 und 2.
- Figur 6:: Zeitlicher Verlauf der Differenzen D und -D der Empfangssignale für die Signalauswertung gemäß Figur 4,
a) bei auf eine vordere Kante der Etikette gerichteten Sendelichtstrahlen,
b) bei auf eine hintere Kante der Etikette gerichteten Sendelichtstrahlen.

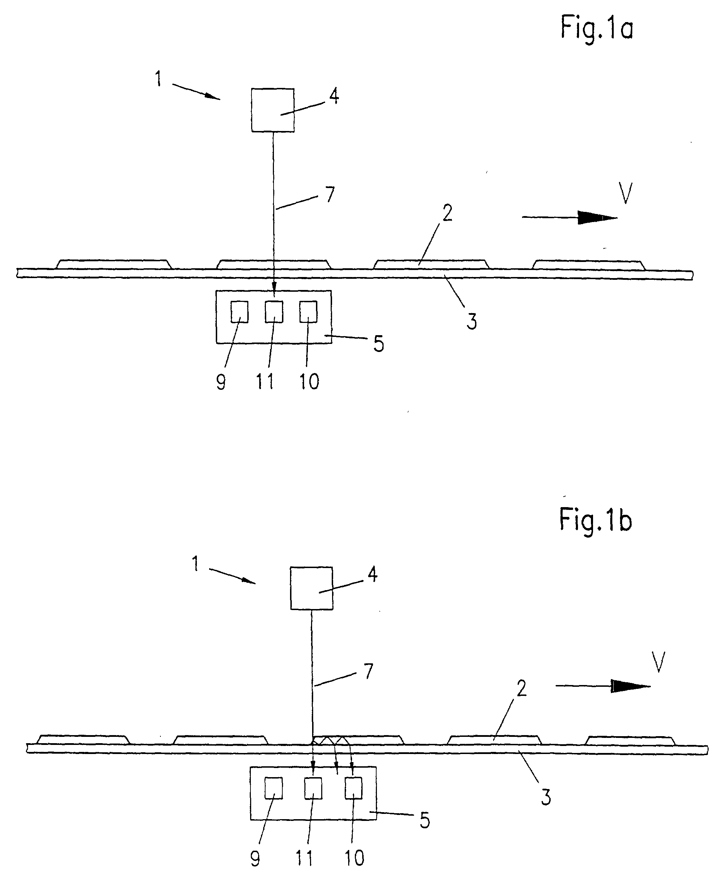

Die Figuren 1a und 1b zeigen den Aufbau eines ersten Ausführungsbeispiels eines optoelektronischen Sensors 1 zur Abtastung von Etiketten 2, die auf einem Trägermaterial 3 angeordnet sind. Das Trägermaterial 3 mit den Etiketten 2 wird mit einer vorgegebenen Geschwindigkeit v in einer vorgegebenen Richtung bewegt. Die Etiketten 2 weisen vorzugsweise einen rechteckigen Querschnitt auf und sind in Bewegungsrichtung des Trägermaterials 3 jeweils in Abstand zueinander hintereinander angeordnet. Die Etiketten 2 sind zweckmäßigerweise auf dem Trägermaterial 3 aufgeklebt.

Der optoelektronische Sensor 1 weist einen Sender 4 und ein Empfangselement 5 auf, die an eine gemeinsame Auswerteeinheit 6 angeschlossen sind.

Wie in den Figuren 1a und 1b dargestellt ist der Sender 4 oberhalb des Trägermaterials 3 mit den Etiketten 2 angeordnet, auf welches die vom Sender 4 emittierten Sendelichtstrahlen 7 im rechten Winkel auftreffen.

Der Sensor 1 arbeitet im Durchlichtverfahren. Das Empfangselement 5 ist unterhalb des Trägermaterial 3 in der Strahlachse der Sendelichtstrahlen 7 angeordnet.

Zweckmäßigerweise sind der Sender 4 und des Empfangselement 5 in einem nicht dargestellten gemeinsamen Gehäuse integriert. Dabei ist das Gehäuse gabelförmig ausgebildet, wobei der Sender 4 und das Empfangselement 5 jeweils in einem der Schenkel des gabelförmigen Gehäuses gegenüberliegend angeordnet sind. Im Luftspalt zwischen den Schenkeln des Gehäuses ist das Trägermaterial 3 mit den Etiketten 2 geführt.

Der Sender 4 ist als Laserdiode ausgebildet mit einer dieser nachgeordneten, nicht dargestellten Sendeoptik. Der Sender 4 wird von einem Sendertreiber 8 angesteuert. Die vom Sender 4 emittierten Sendelichtstrahlen 7 sind auf die Ebene, in welcher das Trägermaterial 3 mit den Etiketten 2 geführt ist, fokussiert. Dadurch wird ein sehr kleiner Sendelichtfleck am Ort der Abtastung erhalten. Vorteilhafterweise ist der Durchmesser der Sendelichtstrahlen 7 so klein, daß er möglichst exakt auf den Übergangsbereich zwischen Etikette 2 und Trägermaterial 3 konzentriert ist.

Das Empfangselement 5 weist mehrere Empfänger 9, 10, 11 auf, die jeweils von einer Fotodiode gebildet sind.

Zwei erste Empfänger 9, 10 sind in Bewegungsrichtung der Etiketten 2 in Abstand zueinander so angeordnet, daß die Strahlachse der Sendelichtstrahlen 7 zwischen den Empfängern 9, 10 verläuft. Dabei sind die Empfänger 9, 10 symmetrisch zur Strahlachse der Sendelichtstrahlen 7 angeordnet.

Der Abstand zwischen diesen Empfängern 9, 10 ist erheblich größer als der Durchmesser der Sendelichtstrahlen 7 und kleiner als der Abstand zwischen zwei benachbarten Etiketten 2.

Zwischen den ersten beiden Empfängern 9. 10 ist in der Strahlachse der Sendelichtstrahlen 7 ein dritter Empfänger 11 angeordnet.

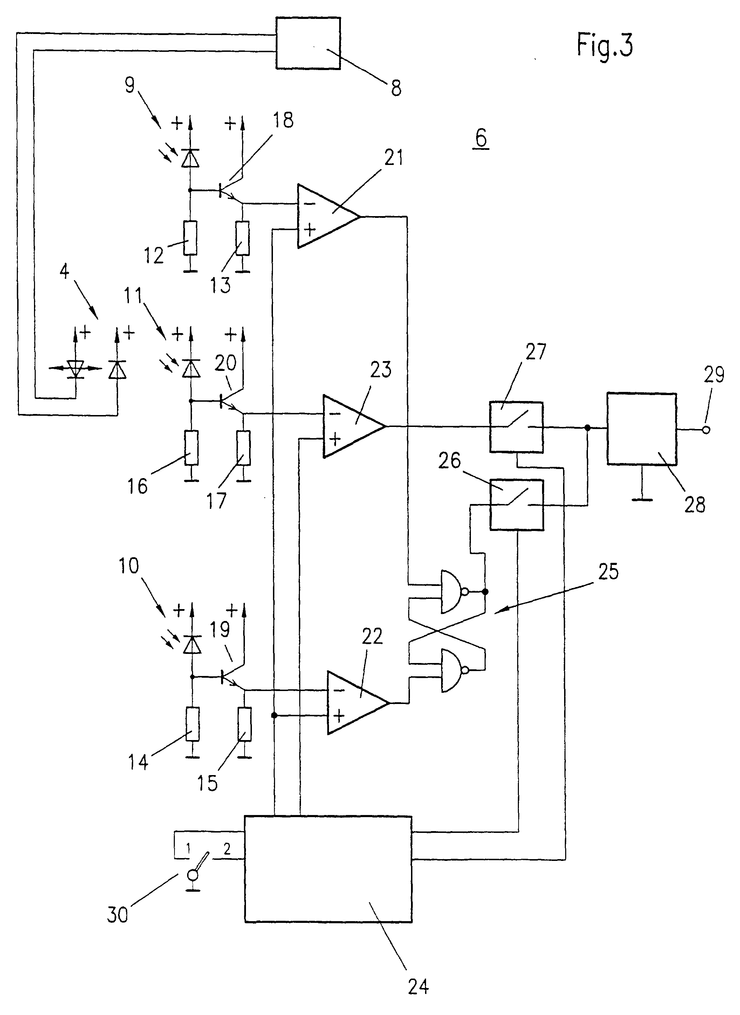

Die Empfangssignale der Empfänger 9, 10, 11 werden in der Auswerteeinheit 6 ausgewertet. Ein erstes Ausführungsbeispiel ist in Figur 3 dargestellt. Die an den Ausgängen der Empfänger 9, 10, 11 anstehenden Empfangssignale sind jeweils über Widerstände 12, 13, 14, 15, 16, 17 und einen Transistor 18, 19, 20 auf einen Komparator 21, 22, 23 geführt. Die die Schwellwerte bildenden Vergleichspannungen der Komparatoren 21, 22, 23 werden über eine Rechnereinheit 24 applikationsspezifisch vorgegeben.

Die Ausgänge der den beiden ersten Empfängern 9, 10 nachgeschalteten Komparatoren 21, 22 sind auf ein Flip-Flop 25 geführt. Dessen Ausgänge sind über Zuleitungen auf einen ersten Schalter 26 geführt. Der Ausgang des dem dritten Empfänger 11 nachgeschalteten Komparators 23 ist auf einen zweiten Schalter 27 geführt. Die Ausgänge der Schalter 27 sind über einen kurzschlußfesten Buffer 28 auf den Signalausgang 29 des Sensors 1 geführt.

Die Schalter 26, 27 sind über eine Teach-in Taste 30, die an die Rechnereinheit 24 angeschlossen ist wahlweise betätigbar.

Je nachdem, ob der erste oder der zweite Schalter 26 oder 27 betätigt wird, werden in der Auswerteeinheit 6 nur die Empfangssignale der ersten beiden Empfänger 9, 10 oder die Empfangssignale des dritten Empfängers 11 ausgewertet.

Für den Fall, daß mit dem Sensor 1 wie den Figuren 1a, 1b dargestellt transparente Etiketten 2 erfaßt werden sollen, die auf ebenfalls transparentem Trägermaterial 3 aufgeklebt sind, wird der erste Schalter 26 betätigt, so daß nur die Empfangssignale der ersten beiden Empfänger 9, 10 ausgewertet werden.

Treffen die Sendelichtstrahlen 7 vollständig auf das Trägermaterial 3 zwischen zwei Etiketten 2 oder, wie in Figur 1a dargestellt vollständig auf eine Etikette 2, so treffen die Sendelichtstrahlen 7 auf eine ebene Objektfläche auf. Demzufolge durchsetzen die Sendelichtstrahlen 7 die Etikette 2 und / oder das Trägermaterial 3 in vertikaler Richtung, ohne daß im Inneren der Etikette 2 und / oder des Trägermaterials 3 eine Strahlablenkung erfolgt. Demzufolge werden die Sendelichtstrahlen 7 vollständig auf den dritten Empfänger 11 geführt. Im Idealfall wird an den ersten beiden Empfängern 9, 10 kein Empfangssignal registriert. In jedem Fall liegen die Pegel der Empfangssignale der Empfänger 9, 10 unterhalb des jeweiligen Schwellwerts.

Ein anderes Bild ergibt sich, wenn die Sendelichtstrahlen 7 auf eine Etikettenkante treffen. In Figur 1b treffen die Sendelichtstrahlen 7 auf die das Ende der Etikette 2 bildenden Kante. Verliefe die Kante exakt in senkrechter Richtung parallel zu den Sendelichtstrahlen 7 so würde an der Kante der Etikette 2 keine Strahlablenkung erfolgen, so daß die gesamte Sendelichtmenge auf den dritten Empfänger 11 träfe.

Eine derartige ideale Kante tritt jedoch in der Praxis nicht auf. Zumindest abschnitts- oder segmentsweise weisen Teile der Kante eine Neigung bezüglich der Strahlachse der Sendelichtstrahlen 7 auf. Dies beruht auf Unregelmäßigkeiten beim Herstellungsprozeß der Etiketten 2, insbesondere beim Ausschneiden oder Ausstanzen der Etiketten 2. Zusätzliche Inhomogenitäten treten durch den Klebstoff auf, mit dem die Etiketten 2 auf das Trägermaterial 3 geklebt sind.

Demzufolge wird ein Teil der Sendelichtstrahlen 7 an der Kante der Etikette 2 gebrochen und verläuft innerhalb der Etikette 2.

Je größer die Kanteninhomogenitäten und je exakter der Durchmesser der Sendelichtstrahlen 7 auf die Kante der Etikette 2 fokussiert ist, desto größer ist der in die Etikette 2 eingekoppelte Anteil der Sendelichtstrahlen 7. An den Grenzflächen der Etikette 2 findet eine Mehrfachreflexion der Sendelichtstrahlen 7 statt.

Bei jeder Reflexion der Sendelichtstrahlen 7 an der Grenzfläche der Etikette 2 tritt auch ein Teil der Sendelichtstrahlen 7 aus der Etikette 2 aus. In Figur 1b ist dieser Fall für die an der unteren Grenzfläche der Etikette 2 erfolgenden Reflexion ausschnittsweise dargestellt. Ein Teil der an der unteren Grenzfläche der Etikette 2 austretenden Sendelichtstrahlen 7 durchdringt das Trägermaterial 3 und trifft auf den darunterliegend angeordneten zweiten Empfänger 10. Da die Sendelichtstrahlen 7 auf das Ende der Etikette 2 gerichtet sind, findet der Lichtleiteffekt innerhalb der Etikette 2 nur in Richtung des zweiten Empfängers 10, nicht jedoch in Richtung des ersten Empfängers 9 statt. Entsprechend liegt das Empfangssignal des ersten Empfängers 9 unterhalb des Schwellwerts, das Empfangssignal des zweiten Empfängers 10 oberhalb des Schwellwerts. Bei der Detektion des Anfangs der Etikette 2 ergeben sich die umgekehrten Signalverhältnisse. Die Schwellwerte sind dabei applikationsspezifisch und materialabhängig so gewählt, daß die durch Lichtleiteffekte auf die beiden ersten Empfänger 9, 10 geführten Sendelichtmenge sicher erfaßbar sind. Ein besonderer Vorteil ist darin zu sehen, daß eine sichere Kantendetektion unabhängig davon gewährleistet ist, ob die Etiketten 2 bedruckt sind oder nicht.

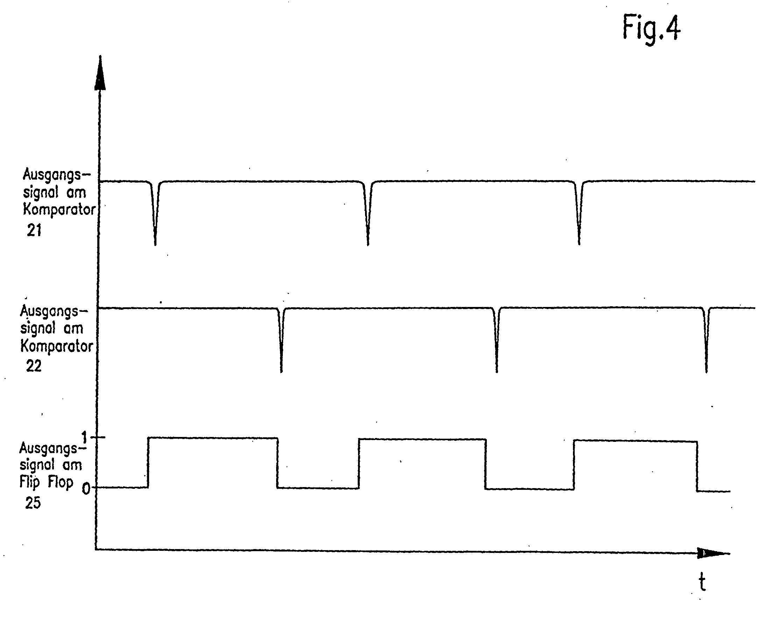

Die Signalauswertung ist in Figur 4 dargestellt. Durch die Detektion des Anfangs der Etikette 2 überschreitet das Empfangssignal des ersten Empfängers 9 kurzzeitig den Schwellwert am Komparator 21. Entsprechend ergibt sich die in Figur 3 dargestellte Signalfolge für das Ausgangssignal des Komparators 21, wobei jeder Signalimpuls der Detektion des Umfangs einer Etikette 2 entspricht.

Entsprechend überschreitet bei der Detektion des Endes der Etikette 2 das Empfangssignal des zweiten Empfängers 10 kurzzeitige den Schwellwert am Komparator 22, wodurch an deren Ausgang das in Figur 3 dargestellte Ausgangssignal erhalten wird.

Die Signale an den Ausgängen der Komparatoren 21, 22 werden im Flip-Flop 25 zusammengeführt. An dessen Ausgang ergibt sich der im unteren Drittel von Figur 3 dargestellte Signalverlauf. Der Signalwert 0 wird erhalten, wenn die Sendelichtstrahlen 7 auf das Trägermaterial 3 zwischen den Etiketten 2 gerichtet sind. Der Signalwert 1 wird erhalten, wenn die Sendelichtstrahlen 7 auf eine Etikette 2 gerichtet sind. Diese Signalfolge liegt am Signalausgang 29 des Sensors 1 an.

Für den Fall, dass mit dem Sensor 1 nicht-transparente Etiketten 2 auf nicht transparenten Trägermaterialen 3, welche beispielsweise aus Papier bestehen, erkannt werden sollen, wird über die Teach-in Taste 30 nur der dritte Empfänger 11 aktiviert. Dabei entspricht diese Konfiguration der Funktionsweise eines nach dem Stand der Technik arbeitenden optoelektronischen Sensors. Der Schwellwert des Komparators 23 am Ausgang des dritten Empfängers 11 ist so gewählt, dass das Empfangssignal des dritten Empfängers 11 oberhalb des Schwellwerts liegt, falls die Sendelichtstrahlen 7 auf das Trägermaterial 3 gerichtet sind. Treffen die Sendelichtstrahlen 7 auf die Etikette 2, so müssen sie eine dickere Materialschicht durchdringen, so dass nur noch eine geringere Lichtmenge auf den dritten Empfänger 11 trifft. Demzufolge liegt das Empfangssignal unterhalb des Schwellwerts. Eine Bedruckung der Etiketten 2 beeinträchtigt die Detektionssicherheit nicht, sondern erhöht diese sogar, da durch die Bedruckung eine weitere Verminderung der auf den dritten Empfänger 11 auftreffenden Lichtmenge bewirkt wird. Auch in diesem Fall wird der Schwellwert zweckmäßigerweise applikationsspezifisch gewählt.

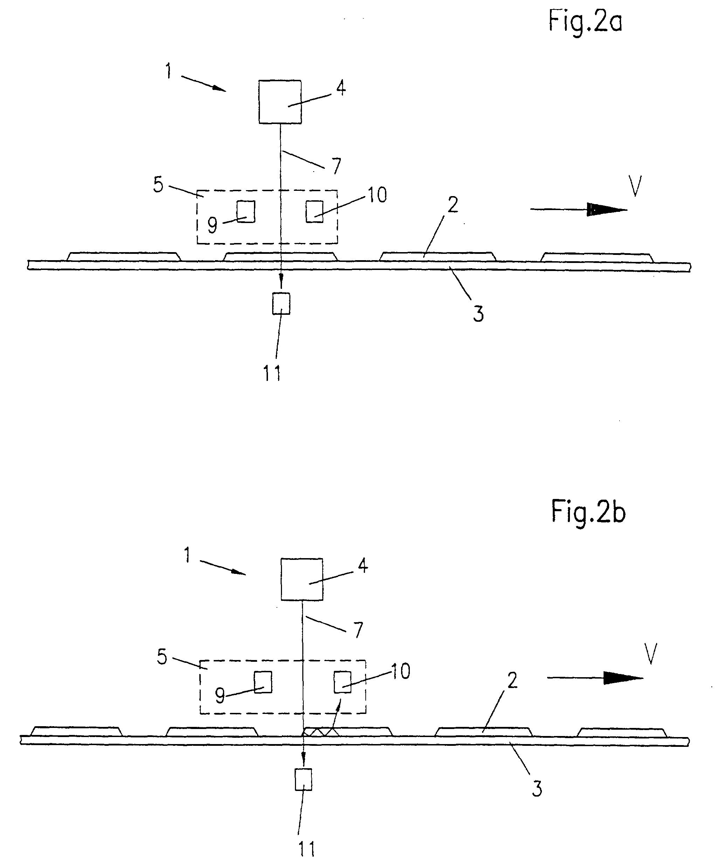

Die Figuren 2a und 2b zeigen den Aufbau eines weiteren optoelektronischen Sensors 1. Der Aufbau dieses Sensors 1 unterscheidet sich vom Sensor 1 gemäß dem Ausführungsbeispiel gemäß den Figuren 1a und 1b dadurch, dass die Empfänger 9 und 10 mit dem Sender 4 auf derselben Seite des Trägermaterials 3 mit den Etiketten 2 angeordnet sind, während der Empfänger 11 nach wie vor auf der gegenüberliegenden Seite des Trägermaterials 3 angeordnet ist. Die Empfänger 9, 10, 11 bilden wiederum das Empfangselement 5.

Die Empfänger 9, 10 sind in Bewegungsrichtung der Etiketten 2 beidseits des Senders 4 angeordnet. Dabei entsprechen die Abstandsverhältnisse der Empfänger 9, 10 dem Ausführungsbeispiel gemäß den Figuren 1a und 1b. Auch der übrige Aufbau des Sensors 1 entspricht dem Aufbau des Sensors 1 gemäß den Figuren 1a und 1b.

Treffen die Sendelichtstrahlen 7 vollständig auf das Trägermaterial 3 zwischen den Etiketten 2 oder, wie in Figur 2a dargestellt, vollständig auf eine Etikette 2, so treffen die Sendelichtstrahlen 7 auf eine ebene Objektfläche auf. Demzufolge durchsetzt zumindest ein Teil der Sendelichtstrahlen 7 die Etikette 2 und / oder das Trägermaterial 3 in vertikaler Richtung, ohne daß im Innern der Etikette 2 und / oder des Trägermaterials 3 eine Strahlablenkung erfolgt. Die Empfänger 9, 10 sind zudem jeweils in einem Abstand zum Sender 4 angeordnet, der so gewählt ist, daß kein oder nahezu kein Sendelicht vom Trägermaterial 3 und / oder von den Etiketten 2 zu den Empfängern 9, 10 zurückreflektiert wird.

Treffen die Sendelichtstrahlen 7 jedoch wie in Figur 2b dargestellt auf eine Kante der Etikette 2, so verläuft ein Teil der Sendelichtstrahlen 7 innerhalb der Etikette 2 und wird auf den oberhalb dieser Etikette 2 angeordneten Empfänger 10 zurückreflektiert.

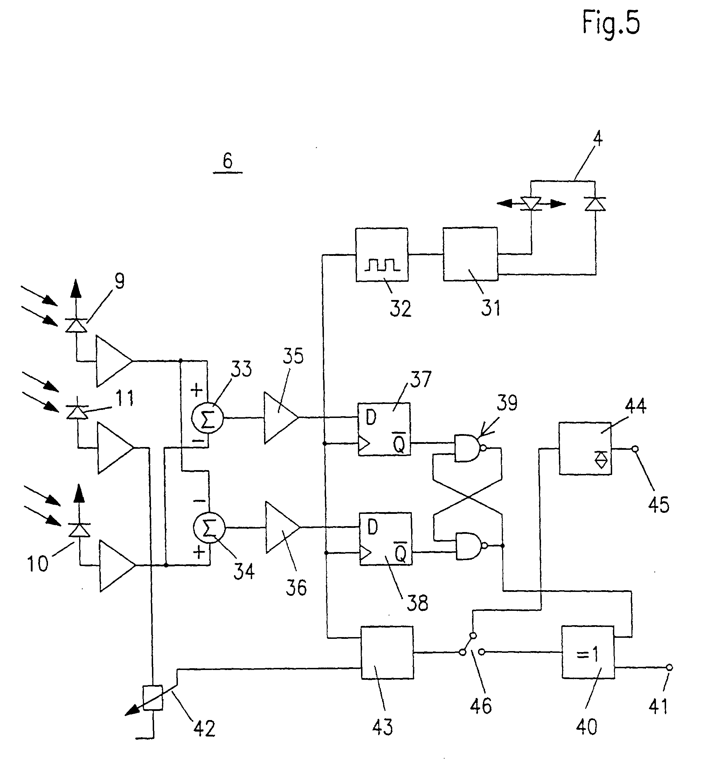

Die Auswertung der Empfangssignale der Empfänger 9, 10, 11 kann wiederum mit der Auswerteeinheit 6 gemäß Figur 3 erfolgen. Im vorliegenden Ausführungsbeispiel wird zur Auswertung die Auswerteeinheit 6 gemäß Figur 5 verwendet. Diese Auswerteeinheit 6 ist auch für den Sensor 1 gemäß den Figuren 1a und 1b einsetzbar.

Bei der Auswerteeinheit 6 gemäß Figur 5 ist der als Laserdiode ausgebildete Sender 4 an einen Lasertreiber 31 und an einen Impulsgenerator 32 angeschlossen und wird damit im Pulsbetrieb betrieben.

Die an den Ausgängen der Empfänger 9, 10 anstehenden Empfangssignale werden einem ersten Differenzverstärker 33 zugeführt, in welchem die Differenz D der Empfangssignale der Empfänger 9 und 10 gebildet wird. Zudem werden die Empfangssignale der Empfänger 9, 10 einem zweiten Differenzverstärker 34 zugeführt, wo die Differenz -D mit umgekehrten Vorzeichen gebildet wird.

An jeden Differenzverstärker 33, 34 ist ein Verstärker 35, 36 und ein diesem nachgeordnetes Flip-Flop 37, 38 angeschlossen. Die Ausgänge dieser FlipFlops 37, 38 sind auf ein weiteres Flip-Flop 39 geführt, dessen Ausgang über ein Exklusiv-Oder Glied 40 auf einen ersten Signalausgang 41 geführt ist.

Die Empfangssignale am Ausgang des dritten Empfängers 11 sind über ein einstellbares Widerstandselement 42 auf einen Komparator 43 mit einer integrierten Auswerteschaltung geführt. Zudem ist auf einen Eingang dieses Komparators 43 auch eine Zuleitung vom Impulsgenerator 32 geführt. Vom Ausgang dieses Komparators 43 führt eine Zuleitung über einen Ausgangsverstärker 44 zu einem zweiten Signalausgang 45. Bei der Auswerteeinheit 6 gemäß Figur 5 ist den Signalausgängen 41, 45 ein Schalter 46 vorgeordnet. Je nach Stellung des Schalters 46 werden in der Auswerteeinheit 6 nur die Empfangssignale der ersten beiden Empfänger 9, 10 oder nur die Empfangssignale des dritten Empfängers 11 ausgewertet. Analog zu dem Ausführungsbeispiel gemäß Figur 3 kann der Schalter 46 mittels einer nicht dargestellten Teach-in Taste betätigt werden.

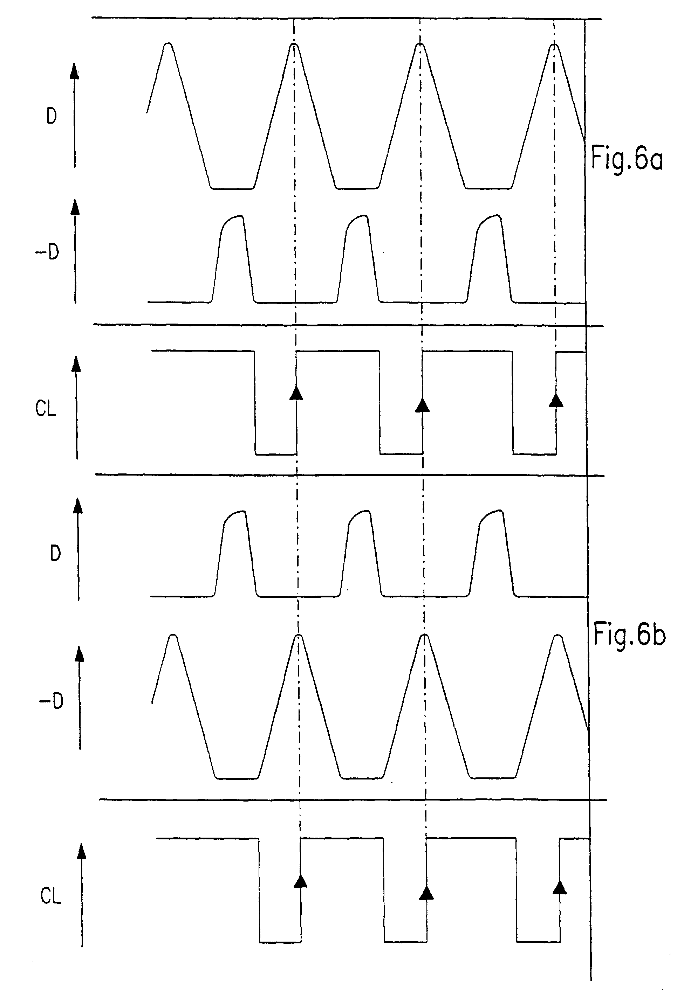

Die Funktionsweise der Auswerteeinheit 6 gemäß Figur 5 ist in den Figuren 6a und 6b veranschaulicht. Treffen die Sendelichtstrahlen 7 vollständig auf das Trägermaterial 3 zwischen zwei Etiketten 2 oder vollständig auf eine Etikette 2, so durchsetzen die Sendelichtstrahlen 7 das Trägermaterial 3 und / oder die Etikette 2 ohne dass Sendelicht zu den Empfängern 9 und 10 gelangt. Dementsprechend wird in diesen Fällen an den Ausgängen der Differenzverstärker 33, 34 jeweils der Signalwert null erhalten.

In Figur 6a sind die Ausgangssignale D und -D am ersten und zweiten Differenzverstärker 33, 34 dargestellt, wenn die Sendelichtstrahlen 7 auf die Vorderkante einer Etikette 2 treffen. In diesem Fall verläuft ein Teil der Sendelichtstrahlen 7 innerhalb der Etikette 2 und wird auf den Empfänger 9 zurückreflektiert. Dagegen wird auf den Empfänger 10 kein Sendelicht zurückreflektiert.

Dementsprechend ergibt sich an den Ausgängen der Differenzverstärker 33. 34 für die Signale D und -D ein von null verschiedener Signalwert wie in Figur 6a dargestellt. Die Signale D und -D stellen dabei Impulsfolgen dar, deren Impulsfolgefrequenz der des Senders 4 entspricht. Das Clock-Signal Cl des Impulsgenerators 32, der die Impulsfrequenz des Senders 4 vorgibt, ist in Figur 6a ebenfalls dargestellt. Die Signale D und -D variieren dabei im Takt des Clock-Signals Cl.

Die Maxima der Signalfolge D am Ausgang des ersten Differenzverstärkers 33 fallen zeitlich mit den Minima der Signalfolge -D am Ausgang des zweiten Differenzverstärkers 34 zusammen. Die Signalverläufe von D und -D sind dabei jedoch nicht vollkommen symmetrisch. Dies beruht darauf, daß die Pegelbegrenzungen für die positiven und negativen Signalanteile der Signalfolgen D und -D nicht symmetrisch gewählt sind. Die Längen der Signalfolgen D und -D sind im wesentlichen durch die Verweilzeit der Sendelichtstrahlen 7 auf der Kante der Etikette 2 bestimmt.

In Figur 6b sind die Ausgangssignale D und -D am ersten und zweiten Differenzverstärker 34 dargestellt, wenn die Sendelichtstrahlen 7 auf die Hinterkante einer Etikette 2 treffen. In diesem Fall verläuft ein Teil der Sendelichtstrahlen 7 innerhalb der Etikette 2 und wird zum Empfänger 10 zurückreflektiert. Dagegen wird auf den Empfänger 9 kein Sendelicht zurückreflektiert.

Dementsprechend ergeben sich die Signalfolgen D und -D an den Ausgängen der Differenzverstärker 33, 34 wie in Figur 6b dargestellt.

Da bei der Detektion der Vorderkante der Etikette 2 nur der Empfänger 9 und bei der Detektion der Hinterkante der Etikette 2 nur der Empfänger 10 belichtet wird, sind die Signalwerte der Signalfolgen D und -D im Figur 6b gegenüber den Signalfolgen D und -D in Figur 6a gegeneinander vertauscht.

Aufgrund dieses Unterschieds in den Signalfolgen D und -D bei der Detektion der Vorder- und Hinterkante der Etikette 2, kann mit der den Differenzverstärkern 33, 34 nachgeordneten Schaltungsanordnung der Anfang und das Ende einer Etikette 2 detektiert werden. Hierzu werden die Signalfolgen D und -D in dem Flip-Flop 39 mittels eines Schwellwerts bewertet und dann dem Exklusiv-Oder Glied 40 zugeführt. Dadurch wird eine binäre Signalfolge analog zur Signalfolge in Figur 4 generiert und auf den Signalausgang 41 geführt. Der Signalwert 0 wird erhalten, wenn die Sendelichtstrahlen 7 auf das Trägermaterial 3 zwischen den Etiketten 2 gerichtet sind. Der Signalwert 1 wird erhalten, wenn die Sendelichtstrahlen 7 auf eine Etikette 2 gerichtet sind. Der Übergang vom Signalwert 0 auf 1 wird bei der Detektion einer Vorderkante der Etikette 2 detektiert. Dieser Übergang erfolgt vorzugsweise dann, sobald die Signalfolge D zum ersten mal den vom Flip-Flop 39 vorgegebenen Schwellwert überschreitet.

Entsprechend erfolgt der Übergang des Signalwerts am Signalausgang 41 von 1 auf 0, sobald die Signalfolge -D zum ersten mal den Schwellwert des FlipFlops 39 überschreitet.

## Patentansprüche

1. Sensor (1) zur berührungsfreien Abtastung von Etiketten (2), die auf einem Trägermaterial (3) mit gegenseitigem Abstand hintereinander angeordnet sind und relativ zum Sensor (1) bewegt werden, so dass die Etiketten (2) nacheinander vom Sensor (1) abgetastet werden, welcher einen in Abstand zu den Etiketten (2) angeordneten Sender (4) aufweist, der Sendelichtstrahlen (7) emittiert, welche die Etiketten (2) und das Trägermaterial (3) durchdringen und auf ein Empfangselement (5) geführt sind, **dadurch gekennzeichnet, dass** die Sendestrahlen (7) auf die Ebene fokussiert sind, in welcher das Trägermaterial (3) mit den Etiketten (2) geführt ist, dass das Empfangselement (5) wenigstens zwei Empfänger (9, 10) aufweist, welche auf der anderen Seite des Trägermaterials (3) als der Sender (4) liegend in Bewegungsrichtung der Etiketten (2) hintereinander in Abstand so angeordnet sind, dass die Strahlachse der Sendelichtstrahlen (7) zwischen den Empfängern (9, 10) verläuft, wobei die Empfänger (9, 10) senkrecht zur Bewegungsrichtung der Etiketten (2) keinen Versatz zur Strahlachse der Sendelichtstrahlen (7) aufweisen, dass die senkrecht zur Bewegungsrichtung angeordneten Kanten der Etiketten (2) zumindest abschnittsweise eine Neigung zur Strahlachse der Sendelichtstrahlen (7) aufweisen, wodurch ein Lichtstrahl in das Etikett (2) einkoppeln kann, dass bei vollständig auf einer Etikette (2) oder dem Trägermaterial (3) auftreffenden Sendelichtstrahlen (7) diese zwischen den Empfängern (9, 10) verlaufen, und dass der an der Kante einer Etikette (2) abgelenkte, innerhalb der Etikette (2) geführte und auf einen der Empfänger (9 oder 10) auftreffende Teil der Sendelichtstrahlen (7) zur Detektion der Kanten in einer Auswerteeinheit (6) ausgewertet wird.

2. Sensor (1) zur berührungsfreien Abtastung von Etiketten (2), die auf einem Trägermaterial (3) mit gegenseitigem Abstand hintereinander angeordnet sind und relativ zum Sensor (1) bewegt werden, so dass die Etiketten nacheinander vom Sensor (1) abgetastet werden, welcher einen in Abstand zu den Etiketten (2) angeordneten, Sendelichtstrahlen (7) emittierenden Sender (4) und ein Empfangselement (5) aufweist, **dadurch gekennzeichnet, dass** die Sendelichtstrahlen (7) auf die Ebene fokussiert sind, in welcher das Trägermaterial (3) mit den Etiketten (2) geführt ist, dass das Empfangselement wenigstens zwei Empfänger (9, 10) aufweist, welche auf der gleichen Seite des Trägermaterials (3) wie der Sender (4) und in Bewegungsrichtung der Etiketten (2) beidseits des Senders (4) in Abstand zueinander so angeordnet sind, dass die Strahlachse der Sendelichtstrahlen (7) zwischen den Empfängern(9, 10) verläuft, und welche senkrecht zur Bewegungsrichtung der Etiketten (2) keinen Versatz zur Strahlachse der Sendelichtstrahlen (7) aufweisen, dass die Sendelichtstrahlen (7) die Etiketten (2) durchdringen, dass die vollständig auf eine Etikette (2) oder das Trägermaterial (3) auftreffenden und daran reflektierten Sendelichtstrahlen (7) zwischen den Empfängern (9, 10) verlaufen, dass die senkrecht zur Bewegungsrichtung angeordneten Kanten der Etiketten (2) zumindest abschnittsweise eine Neigung zur Strahlachse der Sendelichtstrahlen aufweisen, wodurch ein Lichtstrahl in das Etikett (2) einkoppeln kann, und dass der an der Kante einer Etikette (2) abgelenkte, innerhalb der Etikette (2) geführte und auf einen der Empfänger (9 oder 10) zurückreflektierte Teil der Sendelichtstrahlen (7) zur Detektion der Kanten in einer Auswerteeinheit (6) ausgewertet wird.

3. Sensor nach Anspruch 1 oder 2, **dadurch gekennzeichnet, dass** der Sender (4) oberhalb der Etiketten (2) angeordnet ist, so dass die Sendelichtstrahlen (7) senkrecht auf die Etiketten (2) geführt sind.

4. Sensor nach einem der Ansprüche 1 - 3, **dadurch gekennzeichnet, dass** als Sender (4) eine Laserdiode vorgesehen ist.

5. Sensor nach einem der Ansprüche 1 - 4, **dadurch gekennzeichnet, dass** der Durchmesser der Sendelichtstrahlen (7) erheblich kleiner als der Abstand zwischen den Empfängern (9, 10) ist.

6. Sensor nach Anspruch 5, **dadurch gekennzeichnet, dass** der Durchmesser der Sendelichtstrahlen (7) so gewählt ist, dass diese auf den Übergangsbereich zwischen Trägermaterial (3) und Etiketten (2) konzentriert sind.

7. Sensor nach einem der Ansprüche 5 oder 6, **dadurch gekennzeichnet, dass** der Abstand zwischen den Empfängern (9, 10) kleiner als der Abstand zwischen zwei benachbarten Etiketten (2) ist.

8. Sensor nach Anspruch 7, **dadurch gekennzeichnet, dass** die Empfänger (9, 10) symmetrisch zur Strahlachse der Sendelichtstrahlen (7) angeordnet sind.

9. Sensor nach einem der Ansprüche 1 - 8, **dadurch gekennzeichnet, dass** das Empfangselement (5) einen dritten Empfänger (11) aufweist, der in der Strahlachse der Sendelichtstrahlen (7) angeordnet ist, wobei das Trägermaterial (3) mit den Etiketten (2) zwischen dem Sender (4) und dem dritten Empfänger (11) liegt.

10. Sensor nach einem der Ansprüche 1 - 9, **dadurch gekennzeichnet, dass** die Empfänger (9, 10, 11) jeweils von einer Fotodiode gebildet sind.

11. Sensor nach Anspruch 10, **dadurch gekennzeichnet, dass** jedem der Empfänger (9, 10, 11) jeweils ein Komparator (21, 22, 23) nachgeschaltet ist, in welchem die entsprechenden Empfangssignale mit einem Schwellwert bewertet werden.

12. Sensor nach Anspruch 11, **dadurch gekennzeichnet, dass** die Schwellwerte über eine Rechnereinheit (24) einstellbar sind.

13. Sensor nach einem der Ansprüche 11 oder 12, **dadurch gekennzeichnet, dass** die Ausgänge der den beiden ersten Empfängern (9, 10) nachgeschalteten Komparatoren (21, 22) auf ein Flip Flop (25) geführt sind.

14. Sensor nach Anspruch 13, **dadurch gekennzeichnet, dass** die Ausgänge des Flip Flops (25) und des dem dritten Empfänger (11) nachgeschalteten Komparators (23) auf jeweils einen Schalter (26, 27) geführt sind, welche über eine Teach-in Taste (30) betätigbar sind.

15. Sensor nach Anspruch 10, **dadurch gekennzeichnet, dass** der Sender (4) im Pulsbetrieb betrieben wird, dass in einem ersten Differenzverstärker (33) die Differenz D der Empfangssignale an den Ausgängen der Empfänger (9,10) gebildet werden, dass in einem zweiten Differenzverstärker (34) die Differenz -D dieser Empfangssignale mit umgekehrtem Vorzeichen gebildet wird, dass die Ausgänge der Differenzverstärker (33, 34) jeweils auf einen Verstärker (35, 36) und ein diesem nachgeschalteten Flip-Flop (37, 38) geführt sind, und dass deren Ausgänge an ein weiteres Flip-Flop (39) angeschlossen sind, dessen Ausgang über Exklusiv-Oder Glied (40) auf einen Signalausgang (41) geführt ist.

## Claims

1. Sensor (1) for contactless scanning of labels (2), which are arranged one behind the other at a mutual spacing on a carrier material (3) and are moved relative to the sensor (1), so that the labels (2) are scanned in succession by the sensor (1), which comprises a transmitter (4) arranged at a spacing from the labels (2) and emitting transmitted light beams (7), which penetrate the labels (2) and the carrier material (3) and are guided onto a receiving element (5), **characterised in that** the transmitted beams (7) are focussed on the plane in which the carrier material (3) with labels (2) is guided, that the receiving element (5) comprises at least two receivers (9, 10) which lying on the other side of the carrier material (3) from the transmitter (4) are so arranged at a spacing one behind the other in the movement direction of the labels (2) that the beam axis of the transmitted light beam (7) runs between the receivers (9, 10), wherein the receivers (9, 10) perpendicularly to the movement direction of the labels (2) do not have any offset relative to the beam axis of the transmitted light beams (7), that the edges, which are arranged perpendicularly to the movement direction, of the labels (2) have at least in sections an inclination relative to the beam axis of the transmitted light beams (7), whereby a light beam can couple into the label (2), that when transmitted light beams (7) are fully incident on a label (2) or the carrier material (3) these beams run between the receivers (9, 10), and that the part of the transmitted light beams (7), which is deflected at the edge of a label (2), guided within the label (2) and incident on one of the receivers (9 or 10), is evaluated in an evaluating unit (6) for detection of the edges.

2. Sensor (1) for contactless scanning of labels (2), which are arranged one behind the other at a mutual spacing on a carrier material (3) and are moved relative to the sensor (1), so that the labels are scanned in succession by the sensor (1) which comprises a transmitter (4) arranged at a spacing from the labels (2) and emitting transmitted light beams (7), and a receiving element (5), **characterised in that** the transmitted light beams (7) are focussed on the plane in which the carrier material (3) with the labels (2) is guided, that the receiving element comprises at least two receivers (9, 10) which are so arranged on the same side of the carrier material (3) as the transmitter (4) and at a mutual spacing in movement direction of the labels (2) and on both sides of the transmitter (4) that the beam axis of the transmitted light beams (7) runs between the receivers (9, 10) and which perpendicularly to the movement direction of the labels (2) do not have any offset relative to the beam axis of the transmitted light beams (7), that the transmitted light beams (7) penetrate the labels (2), that the transmitted light beams (7) fully incident on a label (2) or the carrier material (3) and reflected thereat run between the receivers (9, 10), that the edges, which are arranged perpendicularly to the movement direction, of the labels (2) have at least in sections an inclination relative to the beam axis of the transmitted light beams, whereby a light beam can couple into the label (2), and that the part, which is deflected at the edge of a label (2), guided within the label (2) and reflected back onto one of the receivers (9 or 10), of the transmitted light beams (7) is evaluated in an evaluating unit (6) for detection of the edges.

3. Sensor according to claim 1 or 2, **characterised in that** the transmitter (4) is arranged above the labels (2) so that the transmitted light beams (7) are guided perpendicularly to the labels (2).

4. Sensor according to one of claims 1 to 3, **characterised in that** a laser diode is provided as transmitter (4).

5. Sensor according to one of claims 1 to 4, **characterised in that** the diameter of the transmitted light beams (7) is substantially smaller than the spacing between the receivers (9, 10).

6. Sensor according to claim 5, **characterised in that** the diameter of the transmitted light beams (7) is so selected that these are concentrated on the transition region between carrier material (3) and labels (2).

7. Sensor according to one of claims 5 and 6, **characterised in that** the spacing between the receivers (9, 10) is smaller than that spacing between two adjacent labels (2).

8. Sensor according to claim 7, **characterised in that** the receivers (9, 10) are arranged symmetrically relative to the beam axis of the transmitted light beams (7).

9. Sensor according to one of claims 1 to 8, **characterised in that** the receiving element (5) comprises a third receiver (11) which is arranged in the beam axis of the transmitted light beams (7), wherein the carrier material (3) with the labels (2) lies between the transmitter (4) and the third receiver (11).

10. Sensor according to one of claims 1 to 9, **characterised in that** the receivers (9, 10, 11) are each constructed as a respective photodiode.

11. Sensor according to claim 10, **characterised in that** a respective comparator (21, 22, 23), in which the corresponding received signals are compared with a threshold value, is arranged downstream of each of the receivers (9, 10, 11).

12. Sensor according to claim 11, **characterised in that** the threshold values are settable by way of a computer unit (24).

13. Sensor according to one of claims 11 and 12, **characterised in that** the outputs of the comparators (21, 22) arranged downstream of the two first receivers (9, 10) are led to a flip-flop (25).

14. Sensor according to claim 13, **characterised in that** the outputs of the flip-flop (25) and of the comparator (23) arranged downstream of the third receiver (11) are each led to a respective switch (26, 27), these switches being actuable by way of a teach-in button (30).

15. Sensor according to claim 10, **characterised in that** the transmitter (4) is operated in pulsed operation, that the difference D of the received signals at the output of the receivers (9, 10) is formed in a first differential amplifier (33), that the difference -D of these received signals is formed with reciprocal sign in a second differential amplifier (34), that the outputs of the differential amplifiers (33, 34) are each led to a respective amplifier (35, 36) and a flip-flop (37, 38) arranged downstream thereof, and that the outputs thereof are connected to a further flip-flop (39), the output of which is led by way of an exclusive OR element (40) to a signal output (41).

## Revendications

1. Capteur (1) pour la détection sans contact d'étiquettes (2) qui sont disposées l'une derrière l'autre à égale distance sur un matériau support (3) et effectuent par rapport au capteur (I) un mouvement tel que les étiquettes (2) sont balayées successivement par le capteur (1), lequel présente un émetteur (4) placé à distance des étiquettes (2) qui émet des rayons lumineux (7) qui traversent les étiquettes (2) et le matériau support (3) et arrivent sur un élément récepteur (5), **caractérisé par le fait que** les rayons d'émission (7) sont focalisés sur le plan dans lequel le matériau support (3) portant les étiquettes (2) est guidé, que l'élément récepteur (5) présente au moins deux récepteurs (9, 10), lesquels sont alignés à distance l'un de l'autre dans la direction de déplacement des étiquettes (2) de l'autre côté du matériau support (3) que l'émetteur (4) de telle sorte que l'axe de faisceau des rayons lumineux d'émission (7) passe entre les récepteurs (9, 10), les récepteurs (9, 10) ne présentant pas de décalage par rapport à l'axe de faisceau des rayons lumineux d'émission (7) perpendiculairement à la direction de déplacement des étiquettes (2), que les bords des étiquettes (2) perpendiculaires à la direction de déplacement présentent au moins par secteurs une inclinaison par rapport à l'axe de faisceau des rayons lumineux d'émission (7), grâce à quoi il y peut y avoir couplage d'un rayon lumineux dans l'étiquette (2), qu'en cas de rayons lumineux d'émission (7) arrivant entièrement sur une étiquette (2) ou le matériau support (3), ceux-ci passent entre les récepteurs (9, 10) et que la partie des rayons lumineux d'émission (7) déviée sur le bord d'une étiquette (2), guidée à l'intérieur de l'étiquette (2) et arrivant sur un des récepteurs (9 ou 10) est évaluée dans une unité d'évaluation en vue de la détection des bords.

2. Capteur (1) pour la détection sans contact d'étiquettes (2) qui sont disposées l'une derrière l'autre à égale distance sur un matériau support (3) et effectuent par rapport au capteur (1) un mouvement tel que les étiquettes (2) sont balayées successivement par le capteur (1), lequel présente un émetteur (4) placé à distance des étiquettes (2) qui émet des rayons lumineux (7) et un élément récepteur (5), **caractérisé par le fait que** les rayons d'émission (7) sont focalisés sur le plan dans lequel le matériau support (3) portant les étiquettes (2) est guidé, que l'élément récepteur présente au moins deux récepteurs (9, 10), lesquels sont alignés à distance l'un de l'autre du même côté du matériau support (3) que l'émetteur (4) et dans la direction de déplacement des étiquettes (2) de part et d'autre de l'émetteur (4) de telle sorte que l'axe de faisceau des rayons lumineux d'émission (7) passe entre les récepteurs (9, 10), lesquels ne présentent pas de décalage par rapport à l'axe de faisceau des rayons lumineux d'émission (7) perpendiculairement à la direction de déplacement des étiquettes (2), que les rayons lumineux d'émission (7) traversent les étiquettes (2), qu'ils arrivent entièrement sur une étiquette (2) ou le matériau support (3) et que les rayons lumineux d'émission (7) réfléchis passent entre les récepteurs (9, 10), que les bords des étiquettes (2) perpendiculaires à la direction de déplacement présentent au moins par secteurs une inclinaison par rapport à l'axe de faisceau des rayons lumineux d'émission, grâce à quoi il y peut y avoir couplage d'un rayon lumineux dans l'étiquette (2) et que la partie des rayons lumineux d'émission (7) déviée sur le bord d'une étiquette (2), guidée à l'intérieur de l'étiquette (2) et réfléchie sur un des récepteurs (9 ou 10) est évaluée dans une unité d'évaluation en vue de la détection des bords.

3. Capteur selon la revendication 1 ou 2, **caractérisé par le fait que** l'émetteur (4) est placé au-dessus des étiquettes (2) de sorte que les rayons lumineux d'émission (7) sont guidés perpendiculairement sur les étiquettes (2).

4. Capteur selon l'une des revendications 1 à 3, **caractérisé par le fait que** l'émetteur (4) est une diode laser.

5. Capteur selon l'une des revendications 1 à 4, **caractérisé par le fait que** le diamètre des rayons lumineux d'émission (7) est considérablement plus petit que la distance entre les récepteurs (9, 10).

6. Capteur selon la revendication 5, **caractérisé par le fait que** le diamètre des rayons lumineux d'émission (7) est choisi de manière à ce que ceux-ci soient concentrés sur la zone de transition entre matériau porteur (3) et étiquettes (2).

7. Capteur selon l'une des revendications 5 ou 6, **caractérisé par le fait que** la distance entre les récepteurs (9,10) est plus petite que la distance entre deux étiquettes (2) voisines.

8. Capteur selon la revendication 7, **caractérisé par le fait que** les récepteurs (9, 10) sont disposés symétriquement par rapport à l'axe de faisceau des rayons lumineux d'émission (7).

9. Capteur selon l'une des revendications 1 à 8, **caractérisé par le fait que** l'élément récepteur (5) présente un troisième récepteur (11) qui est placé sur l'axe de faisceau des rayons lumineux d'émission (7), le matériau porteur (3) portant les étiquettes (2) se trouvant entre l'émetteur (4) et le troisième récepteur (11).

10. Capteur selon l'une des revendications 1 à 9, **caractérisé par le fait que** les récepteurs (9, 10, 11) sont formés chacun d'une photodiode.

11. Capteur selon la revendication 10, **caractérisé par le fait que** chacun des récepteurs (9, 10, 11) est suivi d'un comparateur (21, 22, 23) dans lequel les signaux de réception sont comparés avec une valeur seuil.

12. Capteur selon la revendication 11, **caractérisé par le fait que** les valeurs seuils sont réglables au moyen d'une unité de calcul (24).

13. Capteur selon l'une des revendications 11 ou 12, **caractérisé par le fait que** les sorties des comparateurs (21, 22) placés en aval des deux premiers récepteurs (9, 10) sont amenées à une bascule (25).

14. Capteur selon la revendication 13, **caractérisé par le fait que** les sorties de la bascule (25) et celle du comparateur (23) placé en aval du troisième récepteur (11) sont amenées à des commutateurs (26, 27) que l'on peut commander au moyen d'une touche d'apprentissage (30).

15. Capteur selon la revendication 10, **caractérisé par le fait que** l'émetteur (4) fonctionne par impulsions, que dans un premier amplificateur différentiateur (33) on forme la différence D des signaux de réception aux sorties des récepteurs (9, 10), que dans un deuxième amplificateur différentiateur (34) on forme la différence -D de ces signaux de réception avec un signe inverse, que les sorties des amplificateurs différentiateurs (33, 34) sont amenées chacune à un amplificateur (35, 36) et à une bascule (37, 38) placée en aval de celui-ci et que les sorties de ces dernières sont reliées à une autre bascule (39) dont la sortie est amenée à une sortie de signal (41) par l'intermédiaire d'un circuit ou exclusif (40).
